# EUROPEAN PATENT APPLICATION

(11) **EP 2 535 561 A1**
(43) Date of publication of application: **19.12.2012**
(21) Application number: 10844996.8
(22) Date of filing: 28.06.2010
(51) Int. Cl.: F03D 3/04, F03D 9/00, F03D 1/04

(54) **ENERGIZATION WING AND WIND WHEEL OF WINDMILL GENERATOR WITH VERTICAL AXIS HAVING ENERGIZATION WING**

(30) Priority: 08.02.2010 CN 201019114067
(71) Applicant: National Wind Energy Co. Ltd., Pinggu District, Beijing 101206 (CN)
(72) Inventor: JIANG, Dalong, Beijing 101206 (CN); SHENG, Mingfan, Beijing 101206 (CN); XU, Jinquan, Beijing 101206 (CN)
(74) Representative: Lambert, Ian Robert
(86) International application number: PCT/CN2010/000956
(87) International publication number: WO 2011/094911

(57) **Abstract**

The present invention provides a booster airfoil which is a wind shielding element have a wind shielding surface on it, and this booster airfoil is placed on a support in order to correspond with one side surface of the rotor of a vertical axis wind turbine, and such side surface is a part of the windward side of the rotor in service, and the rotor blades in correspondence with this part of windward side are deterred from rotating as a result of the air stream action from the incoming wind, and the said booster airfoil enables such side surface to be shielded. The present invention also provides a vertical axis wind turbine provided with a booster airfoil. The booster airfoil is a plate body or a small rotor. By providing a booster airfoil upstream of the windward side of the rotor, the air stream is blocked and prevented from producing moment of resistance on the turbo-generator rotor, adding to the rotational moment of the rotor, improving the efficiency of the wind turbine, as a result, the efficiency of the wind turbine may be increased by 25% or more.

## Description

### Technical field

The present invention relates to the technical field of wind power generation and provides a structural element for vertical axis wind turbine, in particular, a booster airfoil in addition to a vertical axis wind turbine rotor provided with a booster airfoil.

### Background art

Wind energy is a renewable energy having the broadest application prospect next to hydraulic energy, which has received a great attention from the various nations of the world. China has become the most active wind energy market in the world. In 2009, China's newly added installed capacity of wind turbines exceeded 8 million kW, with the total accumulative capacity amounting to 20 million kW or more. Thus, the wind power generation equipment manufacturing industry and the relevant field have a quite broad market prospect in China.

Per the direction of revolution axis, wind turbines can be divided into two types, namely, horizontal axis wind turbine and vertical axis wind turbine.

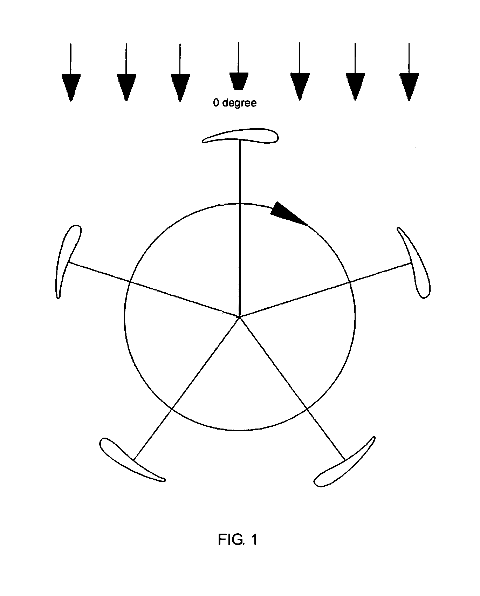

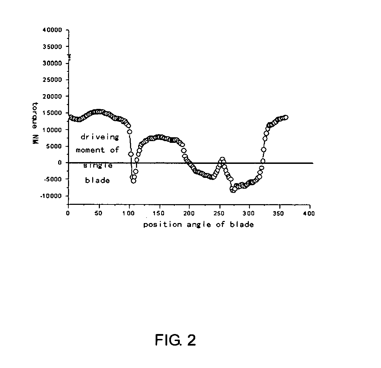

In prior art, vertical axis wind turbines are increasingly demonstrating their characteristics of high efficiency, high power, easy installation and use as well as long service life, etc. However, when the vertically arranged rotor turns as a result of wind drive, the rotating speed of the rotor is not increasing in proportion to the increase of wind power, which is even more so when the wind power is not as high. The reason to this is that, as shown in Fig. 1, when the incoming wind streams (indicated by the several arrows in parallel shown in Fig. 1) impact the rotor, the windward side of the rotor receives an effective pushing force driving the rotor to turn, while the other side receives a resistance deterring the rotor from turning, and the resultant force from the above two forces is the effective power with which the incoming wind streams cause the rotor to turn and do work. Since the existence of wind resistance on the windward side dramatically reduces the driving force obtained by the vertical axis rotor from the incoming wind, the efficiency of the turbo-generator decreases accordingly as shown in Fig. 2.

The solution to this problem in the prior art is to provide a flow guiding device on the windward side of the rotor to form a flow-guiding wind field, which makes the incoming wind to flow through the channel provided by the guiding device before blowing at the rotor and pushing the rotor to turn. This method of wind resistance elimination through introducing the natural wind into the flow guiding channel and then pushing the rotor blades has the demerit of reducing the power of the natural wind. Furthermore, direction of the natural wind is subject to frequent change, under which circumstance, if the flow-guiding device does not change its flow-guiding direction along with the wind direction, the wind energy loss brought about by the flow-guiding device will be much higher. However, if the flow guiding device is designed to change its flow guiding direction as the wind direction changes, it is inevitable that the structure of the flow-guiding device will become more and complex. This may bring about inconvenience for the use, management and maintenance in such as a special harsh environment like the wind farm.

### Description of the present invention

The purpose of the present invention is to improve the deficiency of the prior art and provide a booster airfoil that is completely different from the existing principle of building guiding wind field and is capable of minimizing the resistance preventing the rotor from rotating, thus, improving the rotating efficiency of the rotor;

Another purpose of the present invention is to provide a vertical axis wind turbine rotor complete with a booster airfoil.

The purposes of the present invention are fulfilled as follows:

A booster airfoil which is a wind shielding object with a wind shielding surface provided on it, and this booster airfoil is placed on a support in order to correspond with one side surface of the rotor of a vertical axis wind turbine, and such side surface is a part of the windward side of the rotor in service, and the rotor blades in correspondence with this part of windward side are deterred from rotating as a result of the air stream action from the incoming wind, and the said booster airfoil enables such side surface to be shielded.

A vertical axis wind turbine rotor complete with a booster airfoil and the rotor is revolveably fixed on a center pylon of a vertical axis and connected with the generator rotor, on which a number of blades are provided in addition to a booster airfoil, which is a wind shielding element having a wind shielding surface, and the booster airfoil is placed on a support in a manner without blocking the rotation of the said blades and is located in front of the windward side of the said rotor in service, and the wind shielding surface of the booster airfoil corresponds with the blades on the windward side of the said rotor where rotational resistance is introduced by the air stream from the incoming wind, enabling the side surface of the said rotor where rotational resistance is introduced by the air steam from the incoming wind to be blocked.

According to the present invention, a concept completely different from the prior art is adopted to solve the problem of reduced wind turbine efficiency due to the increased moment of resistance of the wind rotor resulted from the incoming wind streams, ie., by applying the principle of wind field cutoff, where the air streams adding to the moment of resistance to the wind rotor are blocked by the wind shielding object provided, preventing it from acting on the relevant blades of the wind rotor. Through the interception of such wind shield, the energy output of the wind turbine can be increased, and the wind shield is thus called booster airfoil. The said booster airfoil is used to block a part of the windward side of the rotor, and any object that has the function of wind shielding belongs to the booster airfoil mentioned in the present invention.

The said booster airfoil may be a plate type booster airfoil comprising a plate element fixed on the said support, and the side surface of this plate element corresponds with the windward side of the rotor of the said wind turbine to form the said wind shielding surface; or,

The said booster airfoil may be a wind rotor type booster airfoil comprising one rotor revolveably connected on a wind rotor axis, the said wind rotor axis is fixed on the said support, and the cylindrical locus resulted from the outermost rotation of the blades on the rotor of the said booster airfoil forms the said wind shielding surface.

The wind rotor of the present vertical axis wind turbine is a rotor with vertical blades, where the blades are connected onto the hub in the wind rotor by using knightheads and connected with the rotor of the power generator set, and this blade is a vertical cylindrical object whose horizontal cross-section is of the section form of an airplane wing, ie., with respect to the rotor revolution axis, its outer side surface facing outward is a streamlined cambered surface, and there is a smooth transition between this outer side surface and the inner side surface on its opposite to form a relatively large windward end (head end and the relatively smaller tail end of a blade); and/or, the various horizontal cross-sections of said cylindrical object are the same in size and form in vertical direction.

With reference to the revolution axis of the rotor, the distance between the outer side surface and inner side surface of this blade is as such: the distance at the windward end of the blade is relatively bigger, which then gradually reduces along the leeward direction, namely, the width of the blade.

The various horizontal cross-sections of the cylindrical object are the same in size and form in the vertical direction.

The said wind rotor of the said booster airfoil may also be identical to the wind rotor of the wind turbine, ie., rotor with vertical blades, where the blades are connected onto the hub inside the rotor via knighthead, and the said hub can be revolveably fixed on the revolution axis of the said rotor installed in parallel with the said pylon, and the blade takes the form of a vertical cylindrical object, whose horizontal cross-section is of the section form of an airplane wing, in other words, with respect to the rotor revolution axis, its outer side surface facing outward is a streamlined cambered surface, and there is a smooth transition between this outer side surface and the inner side surface on its opposite to form a relatively large windward end (head end and the relatively smaller tail end of a blade); and/or, the various horizontal cross-sections of said cylindrical object are the same in size and form in vertical direction.

With reference to the revolution axis of the rotor, the distance between the outer side surface and inner side surface of this blade is as such: the distance at the windward end of the blade is relatively bigger, which then gradually reduces along the leeward direction, namely, the width of the blade.

The various horizontal cross-sections of the cylindrical object are the same in size and form in the vertical direction.

Rotor of the said booster airfoil may also be rotor of any other form, for example, it may be a propeller type rotor.

The rotor type booster airfoil rotates under the action of the incoming wind streams which may have the same function as the plate type booster airfoil, ie., the function of blocking the air streams from acting on the rotor of the wind turbine to produce moment of rotational resistance.

The said rotor type booster airfoil may have one rotor; or several rotors, all of which are provided on the revolution axis of the said wind rotor.

In case the said booster airfoil has one rotor, the height of the blade on the said rotor is identical to the height of the said blade on the rotor of the said wind turbine; or when there are several of the said rotors, the sum of the height of the blades on the various rotors and the gap in the vertical direction between the neighboring rotor blades equals to the height of the said blades on the rotors of the said wind turbine.

Furthermore, a power generator set is provided between the rotor of the said booster airfoil and the said rotor axis, with the said rotor to be connected with the rotor of the said generator set to form a complete wind power generator set that is smaller than the vertical axis wind turbine.

Between the said rotor and the said rotor axis in the small rotor assembly formed by the rotor and rotor axis provided in the said booster airfoil may be provided light-duty power generator set. The structural style of the light-duty generator unit provided on the booster airfoil may be basically identical to that of heavy-duty vertical axis wind turbine, or may be different but the power generation components in a conventional wind turbine.

The said wind shielding face of the said booster airfoil is a flat surface or cambered surface or a combination of flat surface and cambered surface.

The edge of the outermost side of the said wind shielding surface of the said booster airfoil away from the center pylon of the said rotor provided in the said vertical axis wind turbine should at least correspond with the outermost side of the said side surface of the windward side of the rotor in the said vertical axis wind turbine. Or, the side of the said booster airfoil away from the said center pylon at least corresponds with the outermost side of the windward side surface of the said rotor of the said wind turbine where rotational resistance is introduced by the air stream from the incoming wind; and/or,

The edge of the said wind shielding surface of the said booster airfoil near the side of the center pylon of the said rotor provided in the said vertical axis wind turbine is on the corresponding windward side after turning 180 degrees to 330 degrees in clockwise direction starting from the center point of the said windward side surface and with the said center pylon at the center; and/or,

Width of the said wind shielding surface of the booster airfoil is 1/3 or 1/2 of the entire windward side surface of the rotor in the said wind turbine;

The said wind shielding surface of the said booster airfoil is a cambered surface and the two ends of the cambered surface are as follows:

To correspond with the depression angle of the said rotor, the two ends of the wind shielding surface of the said booster airfoil is placed in the second quadrant with the center of the said rotor as the origin of coordinate or within the range extending from the second quadrant to the third quadrant.

Of the windward surface of the rotor in correspondence with the second quadrant, at least a part of it from the outermost end inward is the said side surface that can produce moment of resistance to the blades in correspondence with the rotor. One end of the said booster airfoil may also further extend a section toward the third quadrant after reaching the outer end of the second quadrant. The booster airfoil at this point can be a curved wind shielding surface or a wind shielding surface of a combination of plane and cambered surface.

Such booster airfoil may ensure that no moment of resistance unfavorable for rotation and power generation is produced by the rotor.

The said support may be placed on a fixed frame. In other words, the said booster airfoil is placed on a fixed frame which may be the said center pylon or any other bearer. In particular, the said support includes two knightheads, and one ends of which are respectively connected with the upper and lower ends of the said booster airfoil while the other ends are connected on the center pylon of the said fixed frame, and these two knightheads are respectively located above and below the said rotor of the said wind turbine, and their lengths are so designed that the said booster airfoil is located outside the rotating peripheral locus of the said rotor blade, preventing it from affecting the movement of the rotor of the present vertical axis wind turbine.

In the case of a plate type booster airfoil, the upper and lower ends of the plate are respectively fixed on two knightheads.

In the case of a rotor type booster airfoil, the upper and lower ends of the rotor axis are respectively fixed on two knightheads.

The said booster airfoil may also be placed on other bearers. For instance, the said support may be placed on a foundation near the rotor of the said vertical axis wind turbine, keeping the said booster airfoil away from the rotating peripheral locus of the said rotor blade.

The direction of the wind blowing toward the rotor of the present wind turbine generally varies, and the orientation of the booster airfoil should also change as the windward side of the rotor varies. In addition, sometime the booster airfoil is not needed for air shielding, then it is necessary to move the booster airfoil from the windward side to the leeward side or downstream side, and to address this need, it is better to design the said support into a movable structure. The said support is revolveably and orientably fixed on the center pylon of the said rotor provided in the said vertical axis wind turbine.

In particular, the said knighthead may be revolveably and orientably fixed on the said center pylon.

And in the case of the said foundation on which the support is placed, track may be placed on the said foundation, and the said support is movably placed on the track for orientation.

A drive mechanism is provided between the said support and the said fixed frame, enabling the booster airfoil on the said support to displace around the said turbine rotor.

A drive unit is connected on the said support for driving the said support and further the said booster airfoil to displace in relation to the said center pylon or the said foundation.

The rotor of the vertical axis wind turbine complete with a booster airfoil provided by the present invention, wherein a booster airfoil is provided in front of the windward side of the rotor for blocking the air streams from acting on the rotor of the wind turbine to produce moment of resistance, can increase the moment of rotation, thus, improving the efficiency of the wind turbine. Through the provision of the said booster airfoil, the efficiency of a wind turbine can increase by more than 25%.

### A brief description of drawings

Fig. 1 is a schematic illustrating a windward rotor of a wind turbine in the prior art;
Fig. 2 is a diagram showing the relation between power and wind velocity of the existing wind turbine;
Fig. 3 is a schematic showing structure of the rotor of the vertical axis wind turbine complete with a plate type booster airfoil provided by the present invention;
Fig. 3a is a structural schematic showing the positional relation between the booster airfoil plate and the rotor of the wind turbine;
Fig. 4 illustrates the ration between the power and wind velocity of the present wind turbine complete with a booster airfoil;
Fig. 5 is a front structural schematic view of the rotor of the vertical axis wind turbine complete with a rotor type booster airfoil provided by the present invention;
Fig. 6 is a top structural schematic view of Fig. 5;
Fig. 7 is a front structural schematic view of the vertical axis wind turbine complete with a booster airfoil composed of multiple rotors.

### Detailed description of the preferred embodiments

The booster airfoil provided by the present invention is a booster airfoil which is a wind shielding object with a wind shielding surface provided on it, and this booster airfoil is placed on a support in order to correspond with one side surface of the rotor of a vertical axis wind turbine, and such side surface is a part of the windward side of the rotor in service, and the rotor blades in correspondence with this part of windward side are deterred from rotating as a result of the air stream action from the incoming wind, and the said booster airfoil enables such side surface to be shielded.

A vertical axis wind turbine rotor complete with a booster airfoil and the rotor is revolveably fixed on a center pylon of a vertical axis and connected with the generator rotor, on which a number of blades are provided in addition to a booster airfoil, which is a wind shielding object, and the booster airfoil is placed on a support and outside the rotating circumferential locus of the said rotor blades and is located in front of the windward side of the said rotor, and the wind shielding surface of the booster airfoil corresponds with the blades on the windward side of the said rotor where rotational resistance is introduced by the air stream from the incoming wind.

According to the present invention, the problem of reduced wind turbine efficiency due to the increased moment of resistance of the wind rotor resulted from the incoming wind streams is solved by applying the principle of wind field cutoff, where the air streams adding to the moment of resistance to the wind rotor are blocked by the wind shielding object provided, preventing it from acting on the relevant blades of the wind rotor. Through the interception of such wind shield, the energy output of the wind turbine can be increased, and the wind shield is thus called booster airfoil.

The said support includes two knightheads, and one ends of which are respectively connected with the upper and lower ends of the said booster airfoil while the other ends are connected on the center pylon of the said fixed frame, and these two knightheads are respectively located above and below the said rotor of the said wind turbine.

The said booster airfoil may be a plate type booster airfoil comprising a plate element (for example, a flat plate) fixed on the said support, for instance, the upper and lower ends of the flat plate are fixed on the two said knightheads, and the side surface of this plate element corresponds with the windward side of the rotor of the said wind turbine to form the said wind shielding surface.

The said booster airfoil may be a wind rotor type booster airfoil comprising one rotor (for example, a rotor with vertical blades) revolveably connected on a wind rotor axis, the said wind rotor axis is fixed on the said support, for instance, the upper and lower ends of the rotor are fixed on the two said knightheads. The cylindrical locus resulted from the outermost rotation of the blades on the rotor of the said booster airfoil forms the said wind shielding surface.

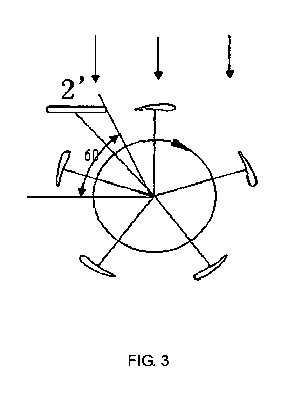

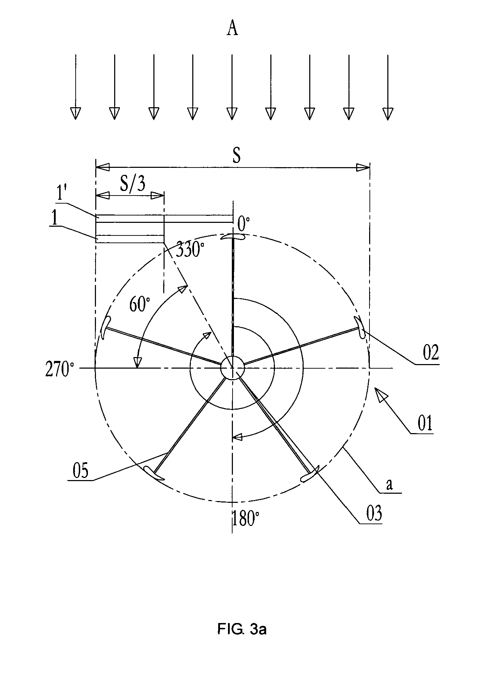

In particular, as shown in Fig. 3a, a vertical axis wind turbine complete with a plate type booster airfoil comprising a rotor 01 with vertical blades, blade 02 on the said vertical blade rotor 01 is connected onto the rotor hub by means of at least two knightheads 05, and the hubs connected by at least one knighthead are connected with the rotor in the power generator unit while rotor hubs that are not connected with the power generator unit are revolveably placed on pylon 03. Meanwhile, the stator corresponding with the rotor of the power generator is also fixed on pylon 03. This blade is a vertical cylindrical object whose horizontal cross-section is of the section form of an airplane wing, ie., with respect to the rotor revolution axis, its outer side surface and the windward end face form a smooth transitional streamline cambered surface, and the spacing of the windward surfaces of the blade is relative big, which gradually reduces along the leeward direction, and the various horizontal cross-sections of said cylindrical object are the same in size and form in vertical direction.

Also included is a booster airfoil which is a flat plate 1, whose upper and lower ends are respectively fixed at one end of the upper and lower knightheads (not shown in the figure), while other ends of these two knightheads are fixed on the said center pylon 03, and these two knightheads are respectively located above and below the said vertical blade rotor; Flat plate 1 of the booster airfoil is located outside the rotating peripheral locus a of the said rotor blade. Booster airfoil provided in such a manner would not affect the rotation of rotor 01 of the wind turbine, and the booster airfoil is located in front of the windward surface of the rotor, the surface of the flat plate corresponds with the windward blades on the side where the rotational resistance is received from the incoming wind streams, which blocks the windward side of the said rotor, allowing the side of the vertical rotor of the wind turbine where rotational resistance is received as a result of the incoming wind streams A is blocked.

One end of the flat plate 1 of the said booster airfoil away from the said center pylon is located outside the outermost end on the said side where the vertical blade rotor of the said wind turbine is shielded, which at least corresponds with the outermost end. The preferred width of the flat plate shall at least be 1/3 to 1/2 of the width S of the entire windward surface of rotor 01, and in the case of the flat plate 1 as shown in Fig. 3a, its width is 1/2 of the width S of the windward surface.

The said booster airfoil may also be an arc form or a combination of plane and cambered surface in form; the one side of the said flat plate near the said center pylon 03 is between 180° and 330° of the windward surface, or, corresponds with the depression angle of the said rotor 01, and the two ends of the cambered surface of the said booster airfoil are placed in the second quadrant with the rotor center as the origin of coordinate system or within the range extending from the second quadrant to the third quadrant.

For example, the one end of flat plate 1 or 2' as shown in Figs. 3 and 3a near the center pylon is in the 330° position within the center of the windward surface (0°) as the starting point, or the width of flat plate 1 blocks 1/3 of the windward surface of the rotor on one side or the central angle in correspondence with the windward surface is 60°, or the one section of flat plate 1 near the center pylon is in the 320° position with the center point of the windward surface (0°) as the starting point. Such booster airfoil may ensure that no moment of resistance unfavorable for rotation and power generation is produced by the rotor.

Furthermore, the relation between the two side edges of the arc plate type or plane and cambered surface combined plate type booster airfoil and the coordinate system of the rotor pylon center may be as such: With reference to the depression angle of the rotor in the said vertical axis wind turbine, the two ends of the wind shielding surface of the said booster airfoil are placed in the second quadrant with the center of the said rotor as the origin of coordinate system or within the range extending from the second quadrant to the third quadrant, which means, the booster airfoil is an arc plate in the second quadrant, and the said arc plate may also extend to the third quadrant. Of the windward surface of the rotor in correspondence with the second quadrant, at least a part of it from the outermost end inward is the said side surface that can produce moment of resistance to the blades in correspondence with the rotor. One end of the said booster airfoil may also further extend a section toward the third quadrant after reaching the outer end of the second quadrant. The booster airfoil at this point can be a curved wind shielding surface or a wind shielding surface of a combination of plane and cambered surface.

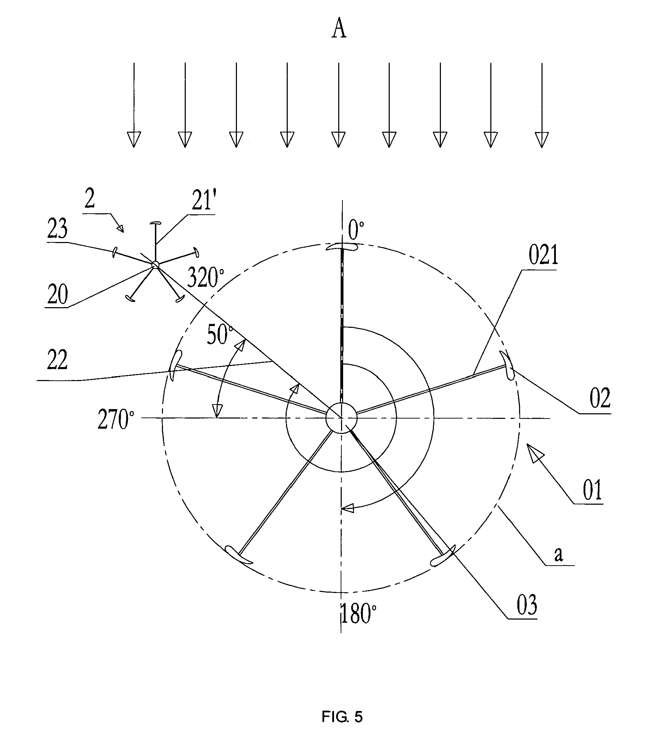

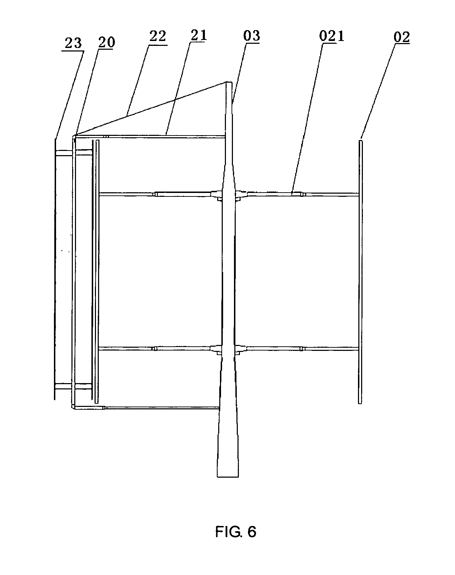

In another embodiment as shown in Figs. 5 and 6, where the booster airfoil is rotor 2, and the rotor of the vertical axis wind turbine complete with a rotor type booster airfoil comprises a vertical blade rotor 01, which is revolveably fixed on a center pylon 03, and on which a number of blades 02 are provided by means of knightheads 021, and the vertical rotor type booster airfoil 2 rotates under the action of incoming wind stream A, which may function to block the air stream from acting on the rotor of the wind turbine to produce moment of resistance just as a flat plate type booster airfoil do. The structure of the rotor of the booster airfoil may also be identical to the structure and form of the said rotor 01 in the said wind turbine, ie., the blade 23 therein is connected onto the hub in the rotor via a knighthead 21' , and this hub is revolveably fixed on the rotor axis 20, whose upper and lower ends are respectively connected with the center pylon 03 via two knightheads 21, and this can be a revolveable and fixed connecting structure enabling the rotor of the booster airfoil to adjust its positional relation with the rotor of the wind turbine according to the wind direction and needs. It is also possible to connect a diagonal drawbar 22 between the top of the center pylon and the upper end of rotor axis of rotor 2 of the booster airfoil in order to stabilize the connected between the booster airfoil and the pylon. The blade of such booster airfoil rotor is in the form of a vertical cylindrical object, and its horizontal cross-section is in the sectional form of an airplane wing, ie., with reference to the rotor axis, its outer side surface and windward end face are smoothly transitional streamlined cambered surface, and the distance between the inner side surface and inner side surface is as such that the distance on the windward surface of the blade is relatively bigger, which gradually reduces along the leeward direction, and in vertical direction, the various horizontal cross-sections of this cylindrical object have the same size and form. The height of the blades on the said booster airfoil rotor is comparable to that of the blades of the rotor of the said wind turbine. Further, a light-duty power generation unit can be provided between the said booster airfoil rotor 2 and the rotor axis 20. The structural form of the said light-duty power generation unit is basically similar to that of the heavy-duty vertical axis wind turbine with the stator provided on the rotor axis, rotor provided at the periphery of the stator and the blades are fixed on the circumferential surface of the rotor by means of knighthead 21' . Such booster airfoil can not only function to block the air stream from acting on the rotor of the wind turbine to produce moment of resistance, improving the power and efficiency of the wind turbine, but also generate additional electric energy, which can be combined with the electric power generated by the wind turbo-generator and sent to the power grid, thus, further improving the power of the wind turbo-generator, or this part of the electric energy can be accumulated by connecting it with a storage device and used for other applications of the present wind turbine.

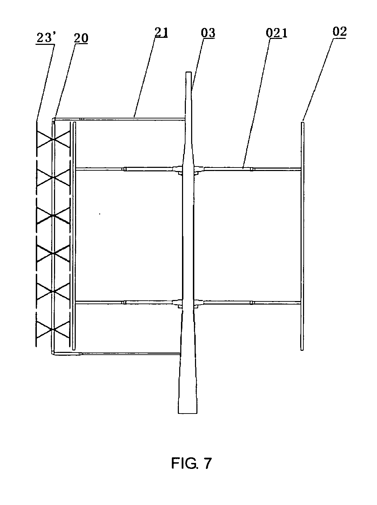

There may be a number of the said rotors of the said booster airfoil, as shown in Fig. 7, each vertical rotor 23' is connected on the said rotor axis 20. Longitudinally fixed on the said rotor axis, the height of the blades on the various rotors and the sum of the clearances in vertical direction of the neighboring rotor blades are comparable to the height of the blades of the said vertical blade rotor. At this point, a number of rotors may be the ones identical to the structure of the booster airfoil rotors as shown in Figs. 5 and 6, or may be rotors of any other type, for example, propeller type rotors. At this point, the number of blades on the corresponding rotor may be five, which are equally distributed on the circumference of the rotor axis. The number of blades may also be 8 or 12.

The number of blades in the rotor 01 of the present vertical axis wind turbine may be 4-24.

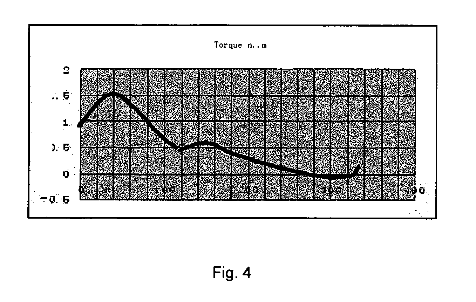

By putting a booster airfoil in front of the rotor of the wind turbine, the improvement of the power generating capacity and efficiency of the wind turbine is obvious, as shown in Fig. 2 and Fig. 4, the horizontal ordinate represents the position angle of the blade which is in "degree" , while the longitudinal coordinate represents the value of effective driving moment obtained by the blade from the wind stream. Fig. 2 shows a rotor of wind turbine without the present booster airfoil, and of the torque of a single blade in the rotor within 1 turn, the effective driving moments with a negative value below 0 accounts for about 25%. Fig. 4 is a torque diagram of a wind turbine complete with the booster airfoil, and it can be seen that the curve is always positive values above 0. From this it can be clearly seen that when in place, the booster airfoil may help increase the power by 20% ∼ 25% or so, and the minimum wind velocity required for rotor starting can also be obviously reduced, enabling the wind turbine provided with the present booster airfoil to generate electric power at a low wind velocity

The support for supporting the said booster airfoil may be the aforementioned knighthead structure that is revolveable around the center pylon. It is possible to provide a driving mechanism on the said pylon, which connects the said knighthead and the booster airfoil is driven by the said driving mechanism to rotate around the pylon, thus, revolving it from the windward side of the rotor to the leeward side through adjusting the relative position between the booster airfoil and the rotor according to the wind direction, or when the wind velocity is fairly high and the booster airfoil is not required.

The support for the flat plate or rotor of the booster airfoil may also be the support placed on the foundation near the wind turbine. To enable the booster airfoil to adjust its position, a track may be provided on the foundation, for example, an annular track, and the support may move in the said track.

### Industrial applicability

The booster airfoil and the vertical axis wind turbine rotor provided with a booster airfoil according to the present invention are applied for vertical axis wind turbine, as a result of which the rotating efficiency of the rotor can be improved.

## Claims

1. A booster airfoil, wherein it is a wind shielding element having a wind shielding surface on it, and this booster airfoil is placed on a support in order to correspond with one side surface of the rotor of a vertical axis wind turbine, and such side surface is a part of the windward side of the rotor in service, and the rotor blades in correspondence with this part of windward side are deterred from rotating as a result of the air stream action from the incoming wind, and the said booster airfoil enables such side surface to be shielded.

2. The booster airfoil of Claim 1 wherein the said booster airfoil is a plate type booster airfoil comprising a plate element which is fixed on the said support, and the said wind shielding surface is on the plate element; or,
the said booster airfoil is a wind rotor type booster airfoil comprising one rotor, which is revolveably provided on a rotor axis, and the rotor axis is fixed on the said support, and the locus formed by the rotating outermost side of the blades on the booster airfoil rotor constitutes the said wind shielding surface.

3. The booster airfoil of Claim 2 wherein the said wind rotor of the said booster airfoil is a rotor with vertical blades, where the blades are connected onto the hub in the wind rotor by using knightheads, and the hub is revolveably fixed on the revolution axis of the said rotor, and this blade is a vertical cylindrical object whose horizontal cross-section is of the section form of an airplane wing, ie., with respect to the rotor revolution axis, its outer side surface facing outward is a streamlined cambered surface, and there is a smooth transition between this outer side surface and the inner side surface on its opposite to form a relatively large windward end (head end and the relatively smaller tail end of a blade); and/or, the various horizontal cross-sections of said cylindrical object are the same in size and form in vertical direction; or,
the rotor of the said booster airfoil is a propeller type rotor.

4. The booster airfoil of Claim 2 wherein the said rotor axis of the said booster airfoil is placed in parallel with the center pylon of the said rotor provided in the said vertical axis wind turbine.

5. The booster airfoil defined in any item of Claims 2-4, wherein, the said booster airfoil has one of the said rotor; or the said booster airfoil has a number of the said rotors, which are all placed on the revolution axis of the said rotors; or,
a power generator set is provided between the rotor of the said booster airfoil and the said rotor axis, with the said rotor to be connected with the rotor of the said generator set to form a complete wind power generator set.

6. The booster airfoil of Claim 5 wherein, in case the said booster airfoil has one rotor, the height of the blade on the said rotor is identical to the height of the said blade on the rotor of the said wind turbine; or when there are several of the said rotors, the sum of the height of the blades on the various rotors and the gap in the vertical direction between the neighboring rotor blades equals to the height of the said blades on the rotors of the said wind turbine.

7. The booster airfoil defined in any item of Claims 1∼4, wherein,
the said wind shielding face of the said booster airfoil is a flat surface or cambered surface or a combination of flat surface and cambered surface; and/or,
the edge of the outermost side of the said wind shielding surface of the said booster airfoil away from the center pylon of the said rotor provided in the said vertical axis wind turbine should at least correspond with the outermost side of the said side surface of the windward side of the rotor in the said vertical axis wind turbine; and/or,
the width of the said wind shielding surface of the booster airfoil is 1/3 or 1/2 of the entire windward side surface of the rotor in the said wind turbine; and/or,
the edge of the said wind shielding surface of the said booster airfoil near the side of the center pylon of the said rotor provided in the said vertical axis wind turbine is on the corresponding windward side after turning 180 degrees to 330 degrees in clockwise direction starting from the center point of the said windward side surface and with the said center pylon at the center; and/or,
the said wind shielding surface of the said booster airfoil is a cambered surface and the two ends of the cambered surface are as follows:
to correspond with the depression angle of the said rotor, the two ends of the wind shielding surface of the said booster airfoil is placed in the second quadrant with the center of the said rotor as the origin of coordinate or within the range extending from the second quadrant to the third quadrant.

8. The booster airfoil defined in any item of Claims 1∼7 wherein, the said support includes two knightheads, and one ends of which are respectively connected with the upper and lower ends of the said booster airfoil while the other ends are connected on the center pylon of the said fixed frame, and these two knightheads are respectively located above and below the said rotor of the said wind turbine, and their lengths are so designed that the said booster airfoil is located outside the rotating peripheral locus of the said rotor blade; or,
the said support is placed on a foundation near the rotor of the said vertical axis wind turbine

9. The booster airfoil of Claim 1 or 8 wherein the said support is revolveably and orientably fixed on the center pylon of the said rotor provided in the said vertical axis wind turbine; or,
a track is placed on the said foundation for supporting the said support, and the said support is movably placed on the track.

10. The booster airfoil of Claim 9 wherein a drive unit is connected on the said support for driving the said support and further the said booster airfoil to displace in relation to the said center pylon or the said foundation.

11. A vertical axis wind turbine rotor provided with a booster airfoil, wherein, the rotor is revolveably fixed on a center pylon of a vertical axis and connected with the generator rotor, on which a number of blades are provided in addition to at least one booster airfoil, which is a wind shielding element having a wind shielding surface, and the booster airfoil is placed on a support in such a manner as not to interfere with the rotation of the said blades and is located in front of the windward side of the said rotor in service, and the wind shielding surface of the booster airfoil corresponds with the blades on the windward side of the said rotor where rotational resistance is introduced by the air stream from the incoming wind, enabling the side surface of the said rotor where rotational resistance is introduced by the air steam from the incoming wind to be blocked.

12. The vertical axis wind turbine rotor provided with a booster airfoil of Claim 11, wherein, the said rotor is a rotor with vertical blades, where the blades are connected onto the hub in the wind rotor by using knightheads and connected with the rotor of the power generator set, and this blade is a vertical cylindrical object whose horizontal cross-section is of the section form of an airplane wing, ie., with respect to the rotor revolution axis, its outer side surface facing outward is a streamlined cambered surface, and there is a smooth transition between this outer side surface and the inner side surface on its opposite to form a relatively large windward end (head end and the relatively smaller tail end of a blade); and/or, the various horizontal cross-sections of said cylindrical object are the same in size and form in vertical direction.
